# FASCICULE DE BREVET EUROPEEN

(11) **EP 3 317 887 B1**
(45) Date de publication et mention de la délivrance du brevet: **24.06.2020**
(21) Numéro de dépôt: 16744450.4
(22) Date de dépôt: 01.07.2016
(51) Int. Cl.: H01B 1/08, C08J 7/06, H01B 1/22, H01H 1/021, C09K 5/14

(54) **MATÉRIAU COMPOSITE CONDUCTEUR ÉLABORE Á PARTIR DE POUDRES REVÊTUES**
LEITFÄHIGER VERBUNDSTOFF AUS BESCHICHTETEN PULVERN
CONDUCTIVE COMPOSITE PRODUCED FROM COATED POWDERS

(30) Priorité: 01.07.2015 FR 1556210
(43) Date de publication de la demande: 09.05.2018
(73) Titulaire: H.E.F., 42160 Andrezieux-Boutheon (FR)
(72) Inventeur: IACOB, Constantin, 76690 Saint Georges sur Fontaine (FR); BUCHER, Sébastien, 42000 Saint Etienne (FR); PROST, Fabrice, 42000 Saint Etienne (FR)
(74) Mandataire: Novagraaf Technologies
(86) Numéro de dépôt international: PCT/FR2016/051671
(87) Numéro de publication internationale: WO 2017/001805

(56) Documents cités:
- EP-A1- 1 775 786
- EP-A1- 2 455 435
- EP-A1- 3 182 417
- WO-A1-2013/178692
- WO-A2-2011/112042
- US-A- 5 965 064

## Description

### Introduction

La présente invention porte sur la fabrication de matériaux composites fonctionnels (conducteurs électriques, thermiques...) élaborés à partir de poudres revêtues. Le matériau composite en question est composé d'une phase organique thermoplastique et d'une phase conductrice thermiquement et/ou électriquement. Cette phase conductrice permet d'apporter la caractéristique de conductivité électrique et/ou thermique à un matériau organique qui est habituellement isolant.

Actuellement, ces propriétés de conductivités sont obtenues en mélangeant des charges conductrices, notamment métalliques ou céramiques, avec une base organique. Différents types de charges sont dès lors utilisés, dans des proportions très variables, pour obtenir une valeur de conductivité thermique et/ou électrique souhaitée.

Par exemple, la demande de brevet EP 1775786 décrit un matériau conducteur pour la réalisation d'électrodes et comprenant un mélange de particules, comprenant chacune un noyau non-conducteur d'au moins un oxyde métallique et un enrobage hybride conducteur réalisé à partir de chaines conductrices hybrides, l'enrobage comprenant nécessairement au moins du carbone.

Dans un autre exemple, la demande de brevet EP 3182417 décrit un matériau composite conducteur comprenant des particules creuses polymères non revêtues et des particules conductrices de type cœur/enrobage. Ces particules conductrices comprennent un enrobage conducteur pouvant notamment être métallique et un cœur creux organique.

Dans encore un autre exemple, la demande de brevet US5965064 décrit un adhésif conducteur anisotropique comprenant une matrice électriquement isolante et des particules conductrices électriquement dispersées dans la matrice.

Dans les procédés de fabrications utilisées dans l'art antérieur, les paramètres d'ajustement pour obtenir un matériau conducteur thermiquement et/ou électriquement sont :
- les natures des charges incorporées dans la matrice organique,
- leurs morphologies (formes),
- leurs granulométries, et
- la proportion massique de charges conductrices par rapport au poids total du mélange charges conductrices, matrice organique.

Lorsque des valeurs de conductivités élevées sont recherchées, les proportions massiques de charges à incorporer dans la matrice organique peuvent être très importantes.

A titre d'exemple, pour obtenir des résistivités électriques inférieures à 1 Ohm.cm dans un matériau organique, les proportions massiques de charges d'un matériau conducteur comme l'argent peuvent dépasser les 50 % par rapport au poids total du mélange.

La diminution de la résistivité électrique dans ce type de matériau est alors obtenue par la création d'un réseau interconnecté de particules conductrices au sein de la matrice organique. Ceci implique donc la présence, répartie de façon homogène, d'une fraction volumique importante et nécessairement élevée desdites particules conductrices.

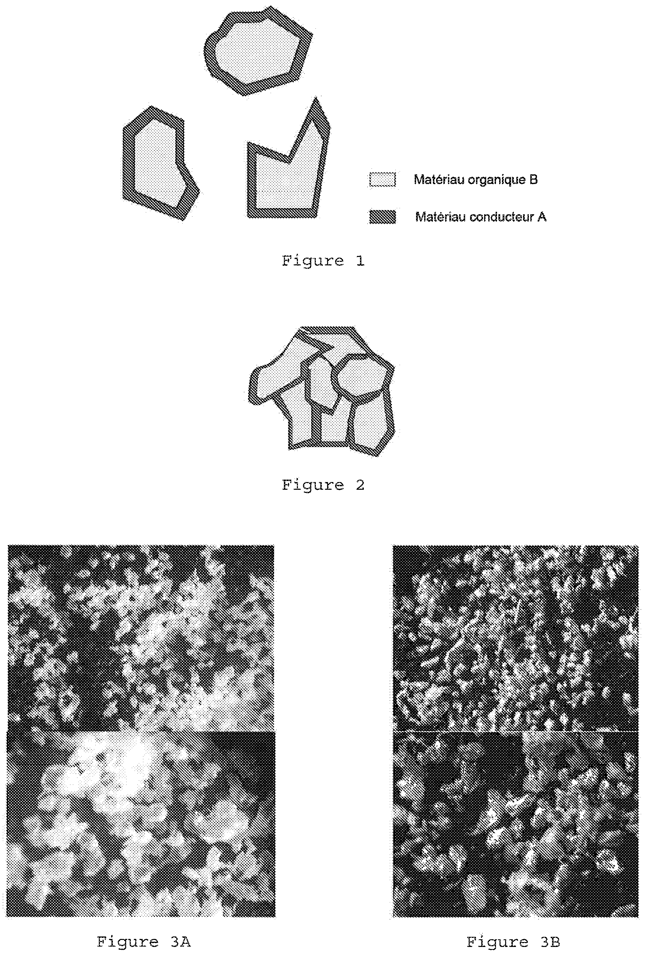

L'objectif de la présente invention est de diminuer de façon substantielle le taux de phase conductrice dans la matrice organique tout en obtenant des caractéristiques de conductivité élevées. Ceci est rendu possible par l'utilisation de poudres revêtues, ou un matériau conducteur A enrobe un matériau organique pulvérulent B, comme représenté sur la figure 1.

### Description de l'invention

Plus particulièrement, la présente invention a pour objet un matériau composite conducteur comprenant un réseau interconnecté de particules conductrices, lesdites particules conductrices comprennent un cœur en matériau organique enrobé d'au moins une couche d'au moins un matériau conducteur thermique et/ou électrique,
caractérisé en ce que ledit cœur en matériau organique est un matériau thermoplastique choisi parmi les polyéthylènes (PE), les polypropylènes (PP), les polyétheréthercétones (PEEK), polyéthercétonecétone (PEKK), les polychlorures de vinyle (PVC), les polyfluorures de vinylidène (PVDF), les polytétrafluoroéthylènes (PTFE), les silicones,
ledit cœur en matériau organique possède une granulométrie comprise entre 5 µm et 300 pm, et
en ce que ledit matériau conducteur est de l'argent ou composé mixte à base d'étain,
la totalité des particules sont interconnectées dans la structure interne dudit matériau composite conducteur mis en forme, formant ainsi un réseau continu tridimensionnel de matériau conducteur, et
en ce que la proportion massique de l'élément conducteur d'enrobage dudit matériau composite conducteur représente entre 1 % et 30 % en poids du poids total du poids du matériau composite conducteur.

Par réseau continu tridimensionnel, on entend au sens de la présente invention, un réseau formé par l'existence de contacts entre les revêtements conducteurs de chacune des particules conductrices.

Préférentiellement, la proportion massique de l'élément conducteur d'enrobage du matériau composite conducteur peut représenter entre 5 % et 20 % en poids du poids total du poids du matériau composite conducteur.

De préférence, le matériau composite conducteur peut être sous forme d'un film ou d'un objet tridimensionnel.

Par objet tridimensionnel, on entend au sens de la présente, un objet en volume qui n'est pas un film.

Les particules conductrices comprennent chacun un cœur en matériau organique et au moins une couche d'un matériau conducteur.

Pour obtenir les particules conductrices enrobées, on réalise un revêtement d'enrobage sur des poudres en matériau organique de tout type de morphologie.

Avantageusement, le cœur en matériau organique peut être sous forme sphérique, lamellaire, ou sous forme d'un flocon, d'un fil, ou d'un granulé suivant une forme irrégulière, spongieuse.

D'une manière avantageuse, le matériau composite conducteur selon l'invention peut présenter une résistivité électrique comprise entre 16.10⁻⁹ Ω.m et 100 Ω.m.

D'une manière avantageuse, le matériau composite conducteur selon l'invention peut présenter une conductivité thermique comprise entre 2 W.m⁻¹.K⁻¹ et 50 W.m⁻¹.K⁻¹, et de préférence entre 5 W.m⁻¹.K⁻¹ et 10 W.m⁻¹.K⁻¹.

Avantageusement, le cœur en matériau organique peut comprendre des charges conductrices thermiquement et/ou électriquement.

Ces charges conductrices thermiquement et/ou électriquement peuvent être revêtues d'un matériau conducteur thermique et/ou électrique comme celles définies précédemment dans la description.

De préférence, ces charges conductrices thermiquement et/ou électriquement peuvent être revêtues d'un matériau conducteur thermique et/ou électrique de type graphite, graphène, nanotubes de carbone, fibres végétales, polymères conducteurs.

L'invention montre l'intérêt que présente l'utilisation de poudres revêtues pour l'élaboration de matériaux composites fonctionnels (conductivités électriques et/ou thermiques).

La fonctionnalité de conductivité est grandement améliorée grâce à la présence de la phase conductrice en surface des grains.

On observe des microstructures idéales avec la présence d'un réseau conducteur interconnecté, comme une sorte de maillage tridimensionnel.

Outre l'aspect du gain économique que représente ce concept, puisqu'il permet d'obtenir des caractéristiques de conductivité élevé pour de faibles taux de charge, l'utilisation d'une tel poudre permet de simplifier sa mise en œuvre en s'affranchissant des opérations délicates et complexes de mélanges de composants qui conduisent inévitablement à des problèmes d'inhomogénéité.

En outre, les conductivités thermiques des matériaux composites obtenus selon l'invention avec des poudres enrobées d'argent, sont supérieures aux valeurs des meilleurs matériaux composites actuels (1 W.m⁻¹.K⁻¹ à 3 W.m⁻¹.K⁻¹) et se situent entre 2 W.m⁻¹.K⁻¹ et 50 W.m⁻¹.K⁻¹, et préférentiellement entre 5 W.m⁻¹.K⁻¹ et 10 W.m⁻¹.K⁻¹.

Les matériaux composites peuvent être fabriqués en pièce finie (frittage, injection...), en bande, film déformables par thermoformage par exemple.

Ces poudres peuvent être utilisées en tant que tel pour réaliser des revêtements fonctionnels par peinture en poudre. Les poudres composites revêtues peuvent être utilisées aussi en imprégnation des textiles techniques.

Il est à noter également que des matériaux absorbants des ondes radar peuvent être élaboré (ou RAM : « *Radar Absorbent Materials* »).

La présente invention a également pour objet un procédé de fabrication d'un matériau composite conducteur tel que défini selon l'invention, comprenant les étapes suivantes :
a) fourniture et/ou réalisation de particules organiques chargées ou non ;
b) enrobage des particules organiques par une ou plusieurs couches d'au moins un matériau conducteur thermique et/ou électrique pour former des particules conductrices,
c) mise en forme de ces particules conductrices pour former un film conducteur ou une pièce dont la forme aura été définie au préalable,
le procédé étant caractérisé en ce que l'étape b) d'enrobage des particules organiques est réalisée :
- soit en utilisant une technologie de traitement de surface par voie sèche, les particules étant mises en suspension dans un lit fluidisé biphasique ou par des moyens mécaniques de mise en rotation ou vibration ;
- soit en utilisant une technologie de traitement de surface en voie humide faisant intervenir des réactions d'oxydoréduction de précipitation ou de polymérisation à la surface des particules, lesdites particules étant mises en suspension dans un lit fluidisé triphasique ou par des moyens mécaniques ou magnétiques d'agitation.

Comme dépôts chimique voie sèche, on peut notamment citer les dépôts chimiques ou physiques ainsi que les traitements thermochimiques avec diffusion.

Après enrobage des particules organiques (étape b), on procède à la mise en forme des particules conductrices ainsi obtenues (étape c).

La mise en forme de ces grains composites par des techniques diverses, communément utilisées dans le domaine de la plasturgie conduit à l'obtention de pièces finies ou semi finies ayant des structures bien particulière. En effet, la présence de la phase conductrice en surface des grains organiques permet naturellement l'obtention d'un réseau conducteur tridimensionnel interconnecté après densification, comme schématisé sur la figure 2.

Avantageusement, l'étape c) de mise en forme des particules conductrices enrobées peut être réalisée par des techniques choisies parmi le frittage suivi d'un laminage, le prototypage, le thermoformage, ou la projection thermique.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 représente une vue schématique des particules conductrices selon l'invention ;
- la figure 2 représente une vue schématique de la structure obtenue après mise en forme des particules conductrices ;
- la figure 3A représente une vue microscopique des cœurs organiques en polyéthylène avant enrobage ;
- la figure 3B représente une vue microscopique des grains polyéthylène après enrobage d'argent par dépôt chimique ;
- la figure 4A représente une vue en coupe microscopique des cœurs organiques en polyéthylène revêtus à 20 % en masse d'argent ;
- la figure 4B représente une vue en coupe microscopique des cœurs organiques en polyéthylène revêtus à 20 % en masse d'argent ;
- les figures 5a et 5b représentent des vues en coupe microscopiques des cœurs organiques en PTFE revêtus à 40% en masse d'argent ;
- Les figures 6a et 6b représentent des vues en coupe microscopiques des cœurs organiques en PEKK revêtus à 30% en masse d'oxyde d'étain ;
- la figure 7 illustre une pièce obtenue après frittage des grains de polyéthylène (PE) revêtus d'argent ;
- la figure 8 illustre la microstructure de la pièce obtenue suite au frittage des grains de PE revêtus d'argent ;
- la figure 9 illustre la microstructure d'un matériau conducteur obtenu à partir d'un mélange de poudres de polyéthylène et d'argent.

Dans ces exemples, sauf indication contraire, tous les pourcentages et parties sont exprimés en pourcentages massiques.

### EXEMPLES

### EXEMPLE 1 selon l'invention

Des essais d'enrobage par de l'argent ont été réalisés sur une poudre de polyéthylène basse densité d'une granulométrie comprise entre 50 et 500 µm et de morphologie irrégulière. Le dépôt d'argent est conduit en bain chimique autocatalytique (lit fluidisé triphasique).

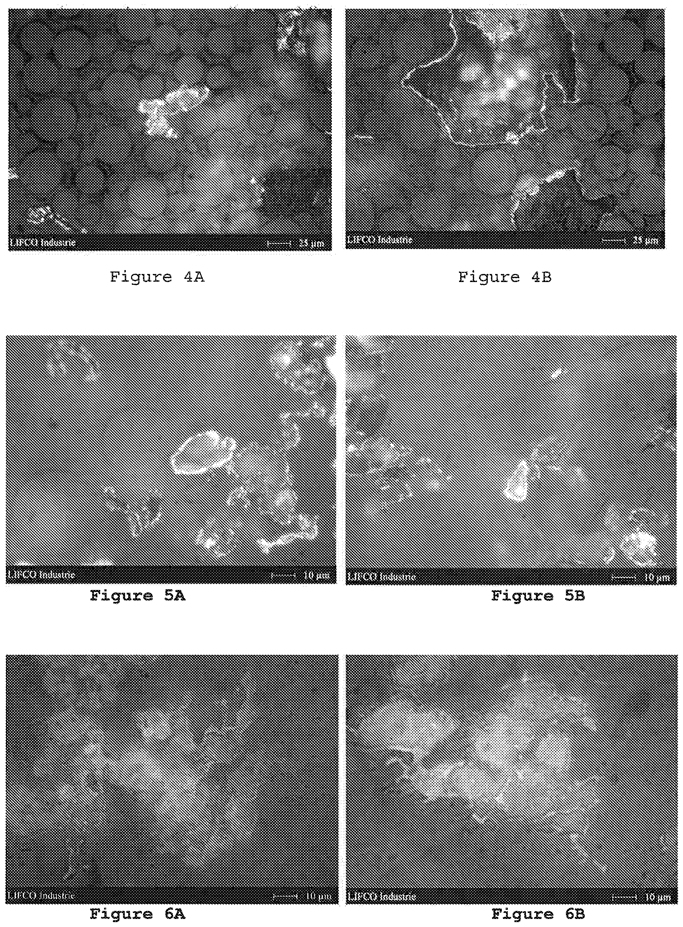

Des proportions massiques d'argent de 10 % (exemple 1B) et 20 % (exemple 1A) par rapport au poids total du mélange polyéthylène + argent sont déposées sous la forme d'un revêtement uniforme à la surface des grains de polyéthylène (PE) comme en témoigne les clichés présentés sur les figures 3A, 3B, 4A et 4B.

Après analyse en coupe des grains revêtus à 20% en masse d'argent, on constate la présence d'un revêtement d'argent dense et continu, d'environ 1 µm à la surface des grains de polyéthylène (figures 4A et 4B).

Ces poudres revêtues peuvent être utilisées comme n'importe quel composant selon les filières classiques de la plasturgie. Leurs mises en formes permettent d'obtenir des semi-produits ou des produits finis par des techniques comme l'extrusion, l'injection, le frittage, le prototypage, etc... Il est à noter que les technologies de mise en forme induisant de forte contraintes de cisaillement sur la matière ne sont pas les mieux adaptées pour obtenir des performances de conductivité optimales.

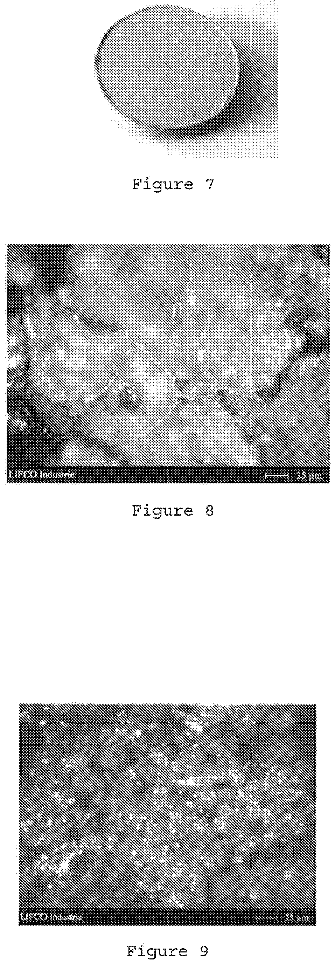

Les grains de polyéthylène revêtus comme indiqué précédemment sont ensuite mises en forme par frittage (moulage) sous charge, pour obtenir un disque d'un diamètre de 30 mm et d'épaisseur 5 mm. La mise en forme est réalisée à une température de 160°C pour le polyéthylène. L'objectif de ces tests préliminaires étant de caractériser la structure des matériaux d'une part, et leurs résistivités électriques d'autre part (et donc leurs conductivités électrique). La pièce obtenue est présentée sur la figure 7.

La microstructure du matériau est analysée par microscopie optique après polissage de sa surface. Les clichés sont présentés sur la figure 8. Le polissage du matériau à base de polyéthylène est rendu difficile du fait de son élasticité qui induit des phénomènes de fluage durant l'opération. Une microstructure nette n'est donc pas aisée à mettre en évidence. On distingue néanmoins la présence de l'argent en périphérie des grains qui forme, là aussi, un réseau interconnecté tridimensionnel.

### EXEMPLE 2 comparatif

À titre comparatif, un matériau composite conducteur a été élaboré à partir d'un mélange conventionnel de poudre de polyéthylène et d'une poudre d'argent. La proportion massique de poudre d'argent a été fixée à 70 % par rapport au poids total du mélange. Un tel mélange permet d'obtenir un matériau composite conducteur présentant des propriétés de conductivité équivalentes au matériau composite élaboré selon l'invention, à savoir comprenant des particules organiques revêtues d'argent, mais avec une proportion très importante de poudre d'argent. La microstructure d'un tel matériau est présentée sur la figure 9. On distingue nettement la présence de l'argent sous forme pulvérulente en proportion importante. Une telle proportion volumique d'argent permet ici de former un réseau suffisamment contigu des grains d'argent pour obtenir une faible résistivité au sein du matériau.

### Comparaison des propriétés des matériaux composites conducteurs de l'exemple 1 selon l'invention et de l'exemple comparatif

Les mesures de résistance électriques ont été réalisées à l'aide d'un micro ohmmètre, avec une distance entre électrode de 2 cm et sans pression de contact. Les résultats obtenus sont reportés dans le tableau 1 suivant :

**Tableau 1**

| Matériau | Exemple | Résistance (ohm) |
|---|---|---|
| Composite PE/Ag20% | Exemple 1A | 0.04 |
| Composite PE/Ag10% | Exemple 1B | 0.15 |
| Mélange PE/Ag70% | Exemple 2 comparatif | 0.05 |

Le tableau 2 suivant liste des valeurs de résistivité électrique et conductivité thermique de quelques matériaux à titre d'exemple :

**Tableau 2**

| Matériaux | Résistivité électrique (µOhm.cm) | Conductivité thermique (W.m⁻¹.K⁻¹) |
|---|---|---|
| Ag | 1.59 | 429 |
| Cu | 1.67 | 394 |
| Al | 2.65 | 234 |
| Fe | 9.71 | 80.4 |
| C/diamant | . | 25-470 |

Le tableau 1 met en évidence les résultats des mesures de résistances de différents matériaux conducteurs (selon l'invention, ou non).

On note la très faible résistance (ou résistivité) des matériaux testés. On constate, que pour les composites élaborés à partir de poudres revêtues, une très faible proportion d'argent est suffisante pour assurer une conductivité électrique maximale. A titre de comparaison, il faut 3.5 fois plus d'argent dans un matériau conventionnel (exemple 2) réalisé à partir d'un mélange de poudre que dans un matériau composite selon l'invention (exemple 1) pour obtenir une résistivité du même ordre. Par ailleurs, on peut également noter un gain très important au niveau de la masse volumique de ces matériaux composites, qui est la conséquence directe d'une plus faible proportion d'argent. Pour une même résistivité, on passe d'une densité de 3.1 g/cm³ pour le composite, à 6.3 g/cm³ pour le mélange des poudres.

Enfin, la caractéristique mécanique de flexibilité du polyéthylène est faiblement impactée pour le matériau composite, alors que le matériau obtenu par mélange tend à devenir plutôt rigide.

Il est à noter que différentes poudres support peuvent aussi être envisagées pour être revêtues afin de rendre les matériaux composites plus ou moins élastiques et/ou plus ou moins durs (thermoplastiques, thermodurcissables et élastomères de masses moléculaires et de densités variables, comme par exemple les PE, les PP, le PEEK, le PEKK, le PVC, le PVDF, le PTFE, la silicone, les époxys, les polyesters, les polyuréthanes ...)

Différents revêtements sur les grains sont possibles en dehors de l'Ag : Cu, Nb, SnO₂, AlN, Ti...

Certains de ces composites ainsi élabores sont parfaitement usinables.

### Exemple 3 (exemple de référence)

Des essais d'enrobage par de l'argent ont été réalisés sur une poudre de PTFE, dont la granulométrie est comprise entre 10 µm et 100 µm et de morphologie irrégulière. Le dépôt d'argent est conduit en bain chimique autocatalytique (lit fluidisé triphasique).

Une proportion massique d'argent de 40 % par rapport au poids total du mélange PTFE + argent est déposée sous la forme d'un revêtement, d'une épaisseur d'environ 1 pm, dense et continu à la surface des grains de PTFE comme en témoigne les analyses en coupes présentés sur les figures 5A et 5B.

La mise en forme de ces grains revêtus par des techniques telles que le frittage comme décrit précédemment, permet d'apporter au matériau, en plus de la conductivité électrique liée à l'argent, le caractère autolubrifiant et anti-adhérant propre au PTFE.

### Exemple 4 selon l'invention

Des essais d'enrobage par de l'oxyde d'étain ont été réalisés sur une poudre de PEKK (Poly-Ether-Ketone-Ketone) d'une granulométrie comprise entre 50 et 300 µm et de morphologie spongieuse. Le dépôt d'oxyde d'étain est obtenu par précipitation en voie humide (lit fluidisé triphasique).

Une proportion massique d'oxyde d'étain de 30 % par rapport au poids total du mélange PEKK + oxyde d'étain est déposée sous la forme d'un revêtement, d'une épaisseur comprise entre 1 et 2pm, uniforme à la surface des grains de PEKK comme en témoigne les analyses en coupes présentés sur les figures 6A et 6B.
La mise en forme de ces grains revêtus par des techniques telles que le frittage comme décrit précédemment, permet d'apporter au matériau un caractère antistatique lié à la présence de l'oxyde d'étain, et d'avoir une température de service maximale admissible très élevée (∼250°C en continu) propre à l'une des caractéristique du PEKK.

## Revendications

1. Matériau composite conducteur comprenant un réseau interconnecté de particules conductrices, lesdites particules conductrices comprennent un cœur en matériau organique enrobé d'au moins une couche d'un matériau conducteur thermique et/ou électrique,
**caractérisé en ce que** ledit cœur en matériau organique est un matériau thermoplastique choisi parmi les polyéthylènes (PE), les polypropylènes (PP), les polyétheréthercétones (PEEK), polyéthercétonecétone (PEKK), les polychlorures de vinyle (PVC), les polyfluorures de vinylidène (PVDF), les polytétrafluoroéthylènes (PTFE), les silicones,
ledit cœur en matériau organique possède une granulométrie comprise entre 5 µm et 300 µm, et
**en ce que** ledit matériau conducteur est de l'argent ou composé mixte à base d'étain,
la totalité des particules sont interconnectées dans la structure interne dudit matériau composite conducteur, formant ainsi un réseau continu tridimensionnel de matériau conducteur, et
**en ce que** la proportion massique de l'élément conducteur d'enrobage dudit matériau composite conducteur représente entre 1 % et 30 % en poids du poids total du matériau composite conducteur.

2. Matériau composite conducteur selon la revendication 1, dans lequel la proportion massique de l'élément conducteur d'enrobage dudit matériau composite conducteur représente entre 5 % et 20 % en poids du poids total du matériau composite conducteur.

3. Matériau composite conducteur selon l'une quelconque des revendications 1 ou 2, dans lequel ledit matériau composite conducteur est sous forme d'un film ou d'un objet tridimensionnel.

4. Matériau composite conducteur selon l'une quelconque des revendications 1 à 3, dans lequel ledit cœur en matériau organique se présente sous forme sphérique, lamellaire, ou sous forme d'un flocon, d'un film, ou d'un granulé suivant une forme irrégulière, spongieuse.

5. Matériau composite conducteur selon l'une quelconque des revendications 1 à 4, présentant une résistivité électrique comprise entre 16.10⁻⁹ Ω.m et 100 Ω.m.

6. Matériau composite conducteur selon l'une quelconque des revendications 1 à 5, présentant une conductivité thermique comprise entre 2 W.m⁻¹.K⁻¹ et 50 W.m⁻¹.K⁻¹.

7. Matériau composite conducteur selon la revendication6, présentant une conductivité thermique comprise entre 5 W.m⁻¹.K⁻¹ et 10 W.m⁻¹.K⁻¹.

8. Matériau composite conducteur selon l'une quelconque des revendications 1 à7, dans lequel ledit cœur en matériau organique comprend des charges thermiquement et/ou électriquement conductrices.

9. Matériau composite conducteur selon la revendication8, dans lequel lesdites charges conductrices sont revêtues d'un matériau conducteur thermique et/ou électrique de type graphite, graphène, nanotubes de carbone, fibres végétales, polymères conducteurs.

10. Procédé de fabrication d'un matériau composite conducteur selon l'une quelconque des revendications 1 à 9, comprenant les étapes suivantes :
a) fourniture et/ou réalisation de particules organiques chargées ou non ;
b) enrobage desdites particules organiques par une ou plusieurs couches d'au moins un matériau conducteur thermique et/ou électrique pour former des particules conductrices,
c) mise en forme desdites particules conductrices pour former un film conducteur ou une pièce dont la forme aura été définie au préalable,
ledit procédé étant **caractérisé en ce que** l'étape b) d'enrobage desdites particules organiques est réalisée :
- soit en utilisant une technologie de traitement de surface par voie sèche, lesdites particules étant mises en suspension dans un lit fluidisé biphasique ou par des moyens mécaniques de mise en rotation ou vibration ;
- soit en utilisant une technologie de traitement de surface en voie humide faisant intervenir des réactions d'oxydoréduction de précipitation ou de polymérisation à la surface des particules, lesdites particules étant mises en suspension dans un lit fluidisé triphasique ou par des moyens mécaniques ou magnétiques d'agitation.

11. Procédé de fabrication d'un matériau composite conducteur selon la revendication10, dans lequel l'étape c) de mise en forme desdites particules conductrices est réalisée par des techniques choisies parmi le frittage suivi d'un laminage, le prototypage, le thermoformage, ou la projection thermique.

## Patentansprüche

1. Leitfähiger Verbundstoff, umfassend ein zusammenhängendes Netz aus leitfähigen Partikeln, wobei die leitfähigen Partikel einen Kern aus organischem Stoff umfassen, der umhüllt ist mit mindestens einer Schicht aus einem elektrisch leitfähigen und/oder wärmeleitfähigen Stoff,
**dadurch gekennzeichnet, dass** der Kern aus organischem Stoff ein thermoplastischer Stoff ist, ausgewählt aus Polyethylenen (PE), Polypropylenen (PP), Polyetheretherketonen (PEEK), Polyetherketonketonen (PEKK), Polyvinylchloriden (PVC), Polyvinylidenfluoriden (PVDF), Polytetrafluorethylenen (PTFE), Silikonen,
der Kern aus organischem Stoff eine Korngröße aufweist, die zwischen 5 µm und 300 µm beträgt, und
dadurch, dass der leitfähige Stoff Silber oder eine Mischverbindung auf Zinnbasis ist,
die Gesamtheit der Partikel in der internen Struktur des leitfähigen Verbundstoffs zusammenhängt, wodurch ein dreidimensionales durchgehendes Netz aus leitfähigem Stoff gebildet wird, und
dadurch, dass der Massenanteil des leitfähigen Umhüllungselements des leitfähigen Verbundstoffs zwischen 1 Gew.-% und 30 Gew.-% des Gesamtgewichts des leitfähigen Verbundstoffs ausmacht.

2. Leitfähiger Verbundstoff nach Anspruch 1, wobei der Massenanteil des leitfähigen Umhüllungselements des leitfähigen Verbundstoffs zwischen 5 Gew.-% und 20 Gew.-% des Gesamtgewichts des leitfähigen Verbundstoffs ausmacht.

3. Leitfähiger Verbundstoff nach einem der Ansprüche 1 oder 2, wobei der leitfähige Verbundstoff die Form eines Films oder eines dreidimensionalen Objekts aufweist.

4. Leitfähiger Verbundstoff nach einem der Ansprüche 1 bis 3, wobei sich der Kern aus organischem Stoff kugelförmig, schuppig oder in Form einer Flocke, eines Films oder eines Granulats gemäß einer unregelmäßigen, schwammigen Form darstellt.

5. Leitfähiger Verbundstoff nach einem der Ansprüche 1 bis 4, wobei er einen elektrischen Widerstand aufweist, der zwischen 16.10⁻⁹ Ω.m und 100 Ω.m beträgt.

6. Leitfähiger Verbundstoff nach einem der Ansprüche 1 bis 5, wobei er eine Wärmeleitfähigkeit aufweist, die zwischen 2 W.m⁻¹.K⁻¹ und 50 W.m⁻¹.K⁻¹ beträgt.

7. Leitfähiger Verbundstoff nach Anspruch 6, wobei er eine Wärmeleitfähigkeit aufweist, die zwischen 5 W.m⁻¹.K⁻¹ und 10 W.m⁻¹.K⁻¹ beträgt.

8. Leitfähiger Verbundstoff nach einem der Ansprüche 1 bis 7, wobei der Kern aus organischem Stoff wärmeleitfähige und/oder elektrisch leitfähige Füllstoffe umfasst.

9. Leitfähiger Verbundstoff nach Anspruch 8, wobei die leitfähigen Füllstoffe beschichtet sind mit einem wärmeleitfähigen und/oder elektrisch leitfähigen Stoff von der Art Graphit, Graphen, Kohlenstoffnanoröhren, Pflanzenfasern, leitfähigen Polymeren.

10. Verfahren zur Herstellung eines leitfähigen Verbundstoffs nach einem der Ansprüche 1 bis 9, umfassend folgende Schritte:
a) Bereitstellen und/oder Ausführen von gefüllten oder nicht gefüllten organischen Partikeln;
b) Umhüllen der organischen Partikel mit einer oder mehreren Schichten aus mindestens einem wärmeleitfähigen und/oder elektrisch leitfähigen Stoff, um die leitfähigen Partikel zu bilden,
c) Formen der leitfähigen Partikel, um einen leitfähigen Film oder ein Teil zu bilden, dessen Form im Voraus definiert wurde,
wobei das Verfahren **dadurch gekennzeichnet ist, dass** der Schritt b) des Umhüllens der organischen Partikel folgendermaßen ausgeführt wird:
- entweder durch Verwenden einer Technik zur Oberflächenbehandlung auf trockenem Wege, wobei die Partikel in einer zweiphasigen Wirbelschicht oder durch mechanische Mittel, die sie in Drehung oder Schwingung versetzen, suspendiert werden;
- oder durch Verwenden einer Technik zur Oberflächenbehandlung auf feuchtem Wege, wobei Redox-Reaktionen zur Fällung oder Polymerisation auf der Oberfläche der Partikel eingesetzt werden, wobei die Partikel in einer dreiphasigen Wirbelschicht oder durch mechanische oder magnetische Rührmittel suspendiert werden.

11. Verfahren zur Herstellung eines leitfähigen Verbundstoffs nach Anspruch 10, wobei der Schritt c) des Formens der leitfähigen Partikel durch Techniken ausgeführt wird, ausgewählt aus Sintern gefolgt von Walzen, Prototypenfertigung, Thermoformung oder thermischem Spritzen.

## Claims

1. Conductive composite material comprising an interconnected network of conductive particles, said conductive particles comprise a core made of organic material coated with at least one layer of a thermally and/or electrically conductive material,
**characterised in that** said core made of organic material is a thermoplastic material chosen from the polyethylenes (PE), the polypropylenes (PP), the polyether ether ketones (PEEK), the polyether ketone ketones (PEKK), the polyvinyl chlorides (PVC), the polyvinylidene fluorides (PVDF), the polytetrafluoroethylenes (PTFE), the silicones,
said core made of organic material has a particle size between 5µm and 300µm, and
**in that** said conductive material is silver or a mixed compound containing tin,
all the particles are interconnected in the internal structure of said conductive composite material, thus forming a three-dimensional continuous network of conductive material, and
**in that** the mass proportion of the conductive coating element of said conductive composite material represents between 1% and 30% by weight of the total weight of the conductive composite material.

2. Conductive composite material according to claim 1, wherein the mass proportion of the conductive coating element of said conductive composite material represents between 5% and 20% by weight of the total weight of the conductive composite material.

3. Conductive composite material according to any one of claims 1 or 2, wherein said conductive composite material is in the form of a film or of a three-dimensional object.

4. Conductive composite material according to any one of claims 1 to 3, wherein said core made of organic material is in spherical, lamellar form, or in the form of a flake, a film, or a pellet with an irregular, spongy shape.

5. Conductive composite material according to any one of claims 1 to 4, having an electrical resistivity between 16.10⁻⁹Ω.m and 100Ω.m.

6. Conductive composite material according to any one of claims 1 to 5, having a thermal conductivity between 2W.m⁻¹.K⁻¹ and 50W.m⁻¹.K⁻¹.

7. Conductive composite material according to claim 6, having a thermal conductivity between 5W.m⁻¹.K⁻¹ and 10W.m⁻¹.K⁻¹.

8. Conductive composite material according to any one of claims 1 to 7, wherein said core made of organic material comprises thermally and/or electrically conductive fillers.

9. Conductive composite material according to claim 8, wherein said conductive fillers are coated with a thermally and/or electrically conductive material of the graphite, graphene, carbon nanotubes, plant fibres, conductive polymers type.

10. Method for manufacturing a conductive composite material according to any one of claims 1 to 9, comprising the following steps:
a) providing and/or producing organic particles that are filled or not;
b) coating said organic particles with one or more layers of at least one thermally and/or electrically conductive material to form conductive particles,
c) shaping said conductive particles to form a conductive film or a part, the shape of which will have been previously defined,
said method being **characterised in that** step b) of coating said organic particles is carried out:
- either by using a technology of dry surface treatment, said particles being placed in suspension in a two-phase fluidised bed or by mechanical means for rotating or vibrating;
- or by using a technology of wet surface treatment involving reactions of oxidation-reduction of precipitation or of polymerisation at the surface of the particles, said particles being placed in suspension in a three-phase fluidised bed or by mechanical or magnetic stirring means.

11. Method for manufacturing a conductive composite material according to claim 10, wherein step c) of shaping said conductive particles is carried out by techniques chosen from sintering followed by lamination, prototyping, thermoforming, or thermal spraying.
